# EUROPÄISCHE PATENTSCHRIFT

(11) **EP 2 994 300 B1**
(45) Veröffentlichungstag und Bekanntmachung des Hinweises auf die Patenterteilung: **27.05.2020**
(21) Anmeldenummer: 14707162.5
(22) Anmeldetag: 28.02.2014
(51) Int. Cl.: B29D 29/08, F16G 1/10, F16G 1/28, F16G 5/08, F16G 5/20, B29B 15/12, D06M 15/564

(54) **VERFAHREN ZUR FERTIGUNG EINES RIEMENS MIT PRÄPARIERTEN ZUGTRÄGERN MIT HÜLLSCHICHT**
METHOD FOR FABRICATING A BELT WITH TREATED TENSION MEMBERS WITH ENVELOPE LAYER
PROCÉDÉ DE FABRICATION D'UNE COURROIE POURVUE DE TIRANTS PRÉPARÉS PRÉSENTANT UNE COUCHE DE REVÊTEMENT

(30) Priorität: 08.05.2013 DE 102013104757
(43) Veröffentlichungstag der Anmeldung: 16.03.2016
(73) Patentinhaber: ContiTech Antriebssysteme GmbH, 30165 Hannover (DE)
(72) Erfinder: BROCKE, Stephan, 22143 Hamburg (DE); GÖSER, Hubert, 29451 Dannenberg (DE); KUCHARCZYK, Andre, 29499 Gülden (DE)
(74) Vertreter: Preusser, Andrea
(86) Internationale Anmeldenummer: PCT/EP2014/053897
(87) Internationale Veröffentlichungsnummer: WO 2014/180581

(56) Entgegenhaltungen:
- EP-A1- 1 241 379
- EP-A2- 0 892 007
- WO-A1-2011/068729
- CN-A- 1 566 247
- DE-A1-102010 043 322
- DE-A1-102011 054 976
- DE-A1-102011 054 978
- JP-A- 2005 248 356
- JP-A- 2010 276 175
- US-A- 4 711 792
- US-A1- 2009 227 406

## Beschreibung

Die Erfindung betrifft ein Verfahren zur Fertigung eines Riemens, der einen Riemenkörper aus einem polymeren Material mit elastischen Eigenschaften, umfassend eine Decklage als Riemenrücken und einen Unterbau mit einer Kraftübertragungszone, und einen in dem Riemenkörper eingebetteten Zugträger umfasst.

Ein Riemen der oben genannten Art spielt insbesondere in der Antriebstechnik eine herausragende Rolle. Derartige Riemen, die auch als Antriebsriemen oder Kraftübertragungsriemen bezeichnet werden, können als Flachriemen, Keilriemen, Keilrippenriemen, Zahnriemen oder als Verbundseile ausgebildet sein. Die Kraftübertragungszone korrespondiert dabei mit dem Riementrieb. Diesbezüglich wird insbesondere auf folgende Patentliteratur verwiesen: DE 38 23 157 A1, DE 100 16 351 A1, DE 10 2006 007 509 A1, DE 10 2007 062 285 A1, DE 10 2008 012 044 A1, DE 10 2009 044 153 A1, EP 0 841 500 A2, WO 2005/080821 A1, WO 2006/066669 A1, WO 2011/068729 A1, US 3 981 206, US 5 417 618 und US 6 491 598.

Darüber hinaus ist es bekannt, Riemen zur Förderung von Materialien einzusetzen, wobei derartige Riemen auch als Transportbänder oder Fördergurte bezeichnet werden. Die Decklage als Riemenrücken ist dann die tragseitige Deckplatte für das Fördermaterial. Der Unterbau ist dann die laufseitige Deckplatte, die Kontakt mit einer Antriebstrommel hat.

Die Elastizität eines Riemens wird dadurch erreicht, dass der Riemenkörper und somit die Decklage und der Unterbau aus einem polymeren Material mit elastischen Eigenschaften bestehen, wobei hier insbesondere die beiden Materialgruppen Elastomere und thermoplastische Elastomere zu nennen sind.

Von besonderer Bedeutung sind Elastomere auf der Basis einer vernetzten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), teilhydrierter oder hydrierter Nitrilkautschuk (HNBR), Fluor-Kautschuk (FKM), Naturkautschuk (NR), ChloroprenKautschuk (CR), Styrol-Butadien-Kautschuk (SBR), Butadien-Kautschuk (BR) oder Polyurethan (PU) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM, PU oder ein EPM/EPDM-Verschnitt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungs-schutzmittel sowie gegebenenfalls weitere Zusatzstoffe, beispielsweise Fasern zwecks Verstärkung und Farbpigmente. Diesbezüglich wird auf den allgemeinen Stand der Kautschukmischungstechnologie verwiesen.

Der Riemen ist mit einem eingebetteten Zugträger versehen, der aus wenigstens einem in Riemenlängsrichtung verlaufenden Zugstrang gebildet ist. Zumeist bilden mehrere Zugstränge eine Zugträgerlage. Von besonderer Bedeutung ist dabei ein Zugstrang in Cordkonstruktion, wobei es diesbezüglich nach dem Stand der Technik verschiedene Werkstoffkonzeptionen gibt. Die wesentlichen Werkstofftypen sind: Stahl, Polyamid (PA), Aramid, Polyester, Carbon (Kohle), Basalt, Polyetheretherketon (PEEK), Polyethylentherephthalat (PET), Polybenzoxazol (PBO) oder Polyethylen-2,6-naphthalat (PEN).

Insbesondere die Kraftübertragungszone eines Riemens für die Antriebstechnik wird mit einer abriebfesten Beschichtung versehen, die zusätzlich zur Geräuschreduzierung dient und zudem noch ölbeständig ausgerüstet sein kann. Eingesetzt wird dabei eine Flockauflage, insbesondere in Form eines Baumwoll- oder Aramidflocks, eine dünne mit Fasern (z.B. Aramidfasern) gefüllte elastische Polymerschicht, eine Textilauflage, insbesondere in Form eines Gewebes, Gewirkes oder Gestrickes, oder eine Folie (z.B. PTFE-Folie) oder ein Folienverbund (z.B. PA-PTFE-Folie). Von besonderer Bedeutung ist das Gewebe. Die hier genannten Beschichtungen werden auf der Kontaktseite zum Riemenkörper, insbesondere zu dessen Unterbau, zumeist haftfreundlich präpariert, beispielsweise mit einem Resorcin-Formaldehyd-Latex (RFL).

Im Folgenden wird nun auf den Stand der Technik der Präparation des Zugträgers näher eingegangen.

In EP 0 841 500 A2 wird ein Zahnriemen vorgestellt, bei dem der Riemenkörper aus einem gegossenen Polyurethan besteht. Der eingebettete Zugträger in Cordkonstruktion ist aus Carbon-Fasern gebildet, verbunden mit einer Cordbearbeitung. Beim Gießen des Riemens wird dabei nur ein Teil der Zugträgerhohlräume mit der Polyurethangießmasse ausgefüllt. Nachteilig ist, dass eine derartige Präparation des Zugträgers mit Polyurethan voraussetzt, dass der Riemenkörper ebenfalls aus einem Polyurethan der gleichen Zusammensetzung besteht. Es wird also keine Rücksicht genommen auf die unterschiedlichen Eigenschaften des Carbon-Zugträgers und des Riemenkörpers.

WO 2011/068729 A1 beschreibt einen Riemen, dessen Zugträger in Cordkonstruktion mit einem vernetzten Polyurethan präpariert ist. Der Füllungsgrad der Zugträgerhohlräume mit dem vernetzten Polyurethan beträgt vorzugsweise 20 % bis 100 %. Zur Bildung eines Polyurethan-Präpolymers werden Polyole ausgewählt aus Polyesterpolyolen, Polycarbonatpolyolen und Polyetherpolyolen als Komponente A und Diisocyanate als Komponente B umgesetzt. Das gebildete Polyurethan-Präpolymer kann dann anschließend mit einem Diamin und/oder mit Wasser, insbesondere mit Wasser, vernetzt werden.

In WO 2011/068729 A1 wird auch im Rahmen einer vorgeschalteten Verfahrensstufe ein Präparationsverfahren für den Zugträger vorgestellt, und zwar ein sogenanntes "Zwei-Bäder-Konzept". Dabei wird der Zugträger mit einem Gemisch aus einem Polyurethan-Präpolymer und einem inerten Lösungsmittel bzw. Dispergiermittel getränkt, wobei die Zugträgerhohlräume mit diesem Gemisch zumindest teilweise gefüllt werden. Danach erfolgt eine Trocknung. Anschließend erfolgt eine Vernetzung mit Wasser. Dann erfolgt die Produktion des Riemens mit dem auf diese Weise präparierten Zugträger.

Bei der Handhabung und Verarbeitung von Zugträgern können sich Einzelfilamente aus dem Zugträger lösen und so die mechanischen Eigenschaften des Zugträgers schwächen. Bei Zugträgern aus elektrisch leitfähigen Filamenten wie Carbon-Fasern besteht zudem das Problem, dass aufwendige Abschirmungen der eingesetzten Maschinen und Schutzmaßnahmen für die Mitarbeiter erforderlich sind. Hierfür besteht noch keine befriedigende Lösung.

DE 10 2011 054976 A1 beschreibt ein Verfahren zur Präparation eines Zugträgers bei der Fertigung eines Riemens, der einen Riemenkörper aus einem polymeren Material mit elastischen Eigenschaften, umfassend eine Decklage als Riemenrücken und eine Unterlage als Kraftübertragungszone, und in dem Riemenkörper eingebettete Zugträger umfasst, wobei der Zugträger in einer oder mindestens zwei vorgeschalteten Präparationsstufen mit einer Gesamt-Präparationsmischung umfassend ein Präpolymer, einen Vernetzer und ein Lösungsmittel oder Dispergiermittel behandelt wird, so dass nach der Trocknung wenigstens ein Teil der Zugträgerhohlräume mit einem vernetzten Polymer ausgefüllt ist.

DE 10 2011 054978 A1 beschreibt ein Verfahren zur Präparation eines Zugträgers eines Riemens, der einen Riemenkörper aus einem polymeren Material mit elastischen Eigenschaften, umfassend eine Decklage als Riemenrücken und eine Unterlage als Kraftübertragungszone, und in dem Riemenkörper eingebettete Zugträger umfasst, wobei der Zugträger in wenigstens zwei vorgeschalteten Präparationsstufen mit einer Gesamt-Präparationsmischung umfassend ein Polyurethan-Präpolymer, einen Vernetzer und ein Lösungsmittel oder Dispergiermittel getränkt wird, so dass nach Trocknung ein Polyurethan mit einer Shore Härte von 0,5 bis 10 wenigstens ein Teil der Zugträgerhohlräume ausfüllt.

DE 10 2010 043322 A1 betrifft einen Antriebsriemen mit einem Riemenkörper aus einem elastischen Werkstoff und eine darin zumindest teilweise eingebettete Zugbewehrung aus

DE 10 2011 054976 A1 beschreibt ein Verfahren zur Präparation eines Zugträgers bei der Fertigung eines Riemens, der einen Riemenkörper aus einem polymeren Material mit elastischen Eigenschaften, umfassend eine Decklage als Riemenrücken und eine Unterlage als Kraftübertragungszone, und in dem Riemenkörper eingebettete Zugträger umfasst, wobei der Zugträger in einer oder mindestens zwei vorgeschalteten Präparationsstufen mit einer Gesamt-Präparationsmischung umfassend ein Präpolymer, einen Vernetzer und ein Lösungsmittel oder Dispergiermittel behandelt wird, so dass nach der Trocknung wenigstens ein Teil der Zugträgerhohlräume mit einem vernetzten Polymer ausgefüllt ist.

DE 10 2011 054978 A1 beschreibt ein Verfahren zur Präparation eines Zugträgers eines Riemens, der einen Riemenkörper aus einem polymeren Material mit elastischen Eigenschaften, umfassend eine Decklage als Riemenrücken und eine Unterlage als Kraftübertragungszone, und in dem Riemenkörper eingebettete Zugträger umfasst, wobei der Zugträger in wenigstens zwei vorgeschalteten Präparationsstufen mit einer Gesamt-Präparationsmischung umfassend ein Polyurethan-Präpolymer, einen Vernetzer und ein Lösungsmittel oder Dispergiermittel getränkt wird, so dass nach Trocknung ein Polyurethan mit einer Shore Härte von 0,5 bis 10 wenigstens ein Teil der Zugträgerhohlräume ausfüllt.

DE 10 2010 043322 A1 betrifft einen Antriebsriemen mit einem Riemenkörper aus einem elastischen Werkstoff und eine darin zumindest teilweise eingebettete Zugbewehrung aus Carboncord, wobei die Zwischenräume des Carboncords teilweise mit einem Bruchverminderungsfüllstoff und teilweise mit dem elastischen Werkstoff des Riemenkörpers gefüllt sind. Der Bruchverminderungsfüllstoff kann Epoxalharz und/oder Isocyanat sein.

Carboncord, wobei die Zwischenräume des Carboncords teilweise mit einem Bruchverminderungsfüllstoff und teilweise mit dem elastischen Werkstoff des Riemenkörpers gefüllt sind. Der Bruchverminderungsfüllstoff kann Epoxalharz und/oder Isocyanat sein.

CN1566247A beschreibt ein zweistufiges Verfahren zur Beschichtung eines Cords mit einer Resorcin-Formaldehyd-Lösung, um die Anbindung der kautschukverstärkenden Cordlagen zu der Kautschukmatrix insbesondere in einem Riemen zu verbessern. Hierzu wird in einer ersten Verfahrensstufe ein erster Zwirn mit RFL gedippt und anschließend wird in einer zweiten Stufe der aus den Zwirnen erhaltene Cord nochmals mit einer Resorcin-Formaldehyd-Lösung gedippt.

Im Rahmen einer Weiterentwicklung der Lehre gemäß WO 2011/068729 A1 besteht die Aufgabe der Erfindung darin, ein Verfahren zur Fertigung eines Riemens mit eingebetteten Zugträgern bereitzustellen, das eine reproduzierbare Polymerfüllung der Zugträgerhohlräume ermöglicht und damit eine hohe Prozesssicherheit gewährleistet. Ferner soll mit diesem Verfahren eine gleichmäßige Benetzung aller Zugträgerfasern, auch der innersten Zugträgerfasern, realisiert werden.

Desweiteren sollen die Ablösung von Einzelfilamenten aus dem Zugträger bei der Handhabung und Verarbeitung möglichst vermieden werden. Ferner sollen auch bei elektrisch leitfähigen Zugträgern, wie z.B. aus Carbonfasern, keine Maßnahmen zur Abschirmung der eingesetzten Maschinen und zum Schutz des Bedienungspersonals nötig sein.

Diese Aufgabe wurde überraschenderweise durch ein Verfahren zur Fertigung eines Riemens 1 mit einer vorgeschalteten Präparation eines Zugträgers 3 gelöst, wobei der Riemen 1
einen Riemenkörper aus einem polymeren Material mit elastischen Eigenschaften, umfassend eine Decklage 2 als Riemenrücken und einen Unterbau 4 mit einer Kraftübertragungszone 7; und
einen in dem Riemenkörper eingebetteten Zugträger 3, wobei der Zugträger 3 mit vernetztem Polymer präpariert ist; umfasst,
wobei bei dem Verfahren in einer vorgeschalteten Verfahrensstufe der Riemenfertigung Zugträgerhohlräume des Zugträgers 3 wenigstens zum Teil mit vernetztem Polymer gefüllt werden und der Zugträger 3 mit einer Hüllschicht aus vernetztem Polymer versiegelt wird, indem in einer einzigen Präparationsstufe oder in mindestens zwei Präparationsstufen der Zugträger 3 mit einer Gesamt-Präparationsmischung, umfassend mindestens ein Präpolymer, mindestens einen Vernetzer und mindestens ein Lösungsmittel oder Dispergiermittel, benetzt wird, und der präparierte Zugträger 3 anschließend getrocknet wird, wobei die Viskosität, bestimmt gemäß ASTM D-445 bei 20°C, der Gesamt-Präparationsmischung bei Einsatz einer einzigen Präparationsstufe im Bereich von 5 bis 150 mPas, und bei Einsatz von mindestens zwei Präparationsstufen im Bereich von 20 bis 500 mPas liegt und die Schichtdicke der Hüllschicht mindestens 5 µm beträgt.

Durch das erfindungsgemäße Verfahren werden die Zugträger, insbesondere aus Carbon-Fasern, an der Oberfläche des Zugträgers mit einer Hüllschicht versiegelt, so dass im Wesentlichen keine offenliegenden Oberflächen vorhanden sind. Dadurch wird der Zugträger gegen mechanische Einwirkungen geschützt und eine Ablösung der Filamente des Zugträgers vermieden. Außerdem wird eine Isolierung von Zugträgen aus elektrisch leitfähigen Fasern, wie Carbon-Fasern, erreicht, so dass die sonst üblichen Schutzmaßnahmen für die eingesetzten Maschinen und das Bedienungspersonal nicht erforderlich sind, was zu einer deutlichen Senkung der Produktionskosten führt.

Durch die Einbindung aller Fasern in der Kraftübertragung wird eine höhere Lebensdauer erreicht. Durch die Benetzung auch der innersten Filamente wird ein guter Schutz erreicht. Mit den erfindungsgemäß hergestellten Kraftübertragungsriemen werden sehr gute Laufergebnisse erzielt.

Bevorzugte Ausführungsformen des Verfahrens sind in den abhängigen Ansprüchen angegeben. Im Folgenden wird die Erfindung im einzelnen erläutert.

Das erfindungsgemäße Verfahren kann durch die folgenden Verfahrensvarianten I oder II durchgeführt werden.

In der Verfahrensvariante I werden in einer vorgeschalteten Verfahrensstufe der Riemenfertigung Zugträgerhohlräume des Zugträgers 3 wenigstens zum Teil mit vernetztem Polymer gefüllt und der Zugträger 3 mit einer Hüllschicht aus vernetztem Polymer versiegelt, indem in einer einzigen Präparationsstufe der Zugträger 3 mit einer Gesamt-Präparationsmischung, umfassend mindestens ein Präpolymer, mindestens einen Vernetzer und mindestens ein Lösungsmittel oder Dispergiermittel, benetzt wird, und der präparierte Zugträger 3 anschließend getrocknet wird.

Während die Gesamt-Präparationsmischung in die Zugträgerhohlräume eindringt und eine Hüllschicht um die Zugträger bildet, findet je nach den Bedingungen (z.B. Konzentration, Temperatur) bereits eine beginnende Vernetzung statt, wobei zumeist im Rahmen der anschließenden Trocknung eine weitere Vernetzung (Ausvernetzung) erfolgt.

In der Verfahrensvariante II werden in einer vorgeschalteten Verfahrensstufe der Riemenfertigung Zugträgerhohlräume des Zugträgers 3 wenigstens zum Teil mit vernetztem Polymer gefüllt und der Zugträger 3 mit einer Hüllschicht aus vernetztem Polymer versiegelt, indem in mindestens zwei Präparationsstufen der Zugträger 3 mit einer Gesamt-Präparationsmischung, umfassend mindestens ein Präpolymer, mindestens einen Vernetzer und mindestens ein Lösungsmittel oder Dispergiermittel, benetzt wird, und der präparierte Zugträger 3 anschließend getrocknet wird.

Für die Verfahrensvariante II mit mindestens zwei Präparationsstufen sind folgende Ausführungsformen zweckmäßig bzw. bevorzugt:
- Bei jeder Präparationsstufe kann die gleiche Gesamt-Präparationsmischung eingesetzt werden.
- Besonders vorteilhaft ist es, wenn bei jeder Präparationsstufe eine andere Gesamt-Präparationsmischung eingesetzt wird. Die Unterschiede können im Präpolymer und/oder Vernetzer liegen. Durch unterschiedliche Präparationsgemische kann die Benetzung weiter optimiert werden. Vor allem kann mit dieser Verfahrensvariante der Füllgrad weiter erhöht werden, falls dies nicht mittels Lösemittelkonzentrationen erreicht werden kann. Andere Gesamt-Präparationsmischungen umfassen dabei auch Gesamt-Präparationsmischungen, die jeweils ein Polyurethan-Präpolymer enthalten, wobei die Polyurethan-Präpolymere aber in der jeweiligen Präparationsmischung verschieden sind. Wie nachstehend genauer erläutert, lassen sich durch Auswahl unterschiedlicher Ausgangskomponenten (Polyole, Polyisocyanate) unterschiedliche Polyurethan-Präpolymere herstellen.
- Darüber hinaus kann zwischen jeder Präparationsstufe eine Trocknung durchgeführt werden.
- Hinsichtlich des Vernetzungsablaufs beim Füllvorgang, bei der Hüllschichtbildung und bei der Trocknung wird auf die Verfahrensvariante I verwiesen, wobei sich die Hüllschicht bei der Verfahrensvariante II auch erst in der letzten Präparationsstufe ausbilden kann oder in der letzten Präparationsstufe lediglich eine Verdickung der bereits gebildeten Hüllschicht erfolgt.

Während bei der Verfahrensvariante I der Zugträger nur in einer Präparationsstufe mit der Gesamt-Präparationsmischung benetzt wird, wird bei der Verfahrensstufe II bei jeder der mindestens zwei Präparationsstufen der Zugträger mit der gleichen oder einer anderen Gesamt-Präparationsmischung benetzt. So beziehen sich die folgenden Angaben zu einer Präparationsstufe bzw. zu der darin verwendeten Gesamt-Präparationsmischung sowohl auf die einzelne Präparationsstufe in der Verfahrensvariante I als auch zu jeder Präparationsstufe der mindestens zwei Präparationsstufen in der Verfahrensvariante II, wobei in der Verfahrensvariante II wie ausgeführt gleiche oder verschiedene Gesamt-Präparationsmischungen eingesetzt werden können.

Die Reaktion (Vernetzung) findet schon während der Trocknung statt, so dass die Reaktion schon zum großen Teil, z.B. zu mehr als 90%, abgeschlossen sein kann, bevor der Zugträger im Riemen verbaut wird. Das endgültige Reaktionsende erfolgt gewöhnlich erst bei der Einbettung in den Riemenkörper. Dadurch ergibt sich eine verbesserte Anbindung des Zugträgers an den Riemenkörper.

Bei beiden Verfahrensvarianten I und II sind folgende verfahrenstechnische Gestaltungsmaßnahmen vorteilhaft:
Als Präpolymer wird bevorzugt ein Polyurethan-Präpolymer eingesetzt. Polyurethan-Präpolymere sind dem Fachmann bekannt und im Handel erhältlich. Sie können durch Umsetzung von Polyolen mit Polyisocyanaten, insbesondere Diisocyanaten, gebildet werden. Polyole sind Verbindungen mit mindestens zwei Hydroxylgruppen. Polyisocyanate sind Verbindungen mit mindestens zwei Isocyanatgruppen. Durch die Auswahl der eingesetzten Polyole und Polyisocyanate können nach Bedarf Polyurethan-Präpolymere mit unterschiedlichen Eigenschaften erhalten werden.

Beispiele für Polyole und Polyisocyanate, insbesondere Diisocyanate, und daraus gebildete Polyurethan-Präpolymere werden beispielsweise in WO 2011/068729 A1 beschrieben, worauf hiermit Bezug genommen wird. Die Polyurethan-Präpolymere können beispielsweise aus Polyolen ausgewählt aus Polyesterpolyolen, Polycarbonatpolyolen und Polyetherpolyolen und Diisocyanaten, wie para-Phenylendiisocyanat und 4,4'-Methylendiphenyldiisocyanat, gebildet werden.

Vernetzer für Präpolymere sind dem Fachmann bekannt und schließen auch Kettenverlängerer ein. Durch den Vernetzer erfolgt eine Vernetzung der Präpolymere, was auch eine Kettenverlängerung einschließt, wodurch eine Härtung erfolgt.

Der Vernetzer für das Präpolymer, insbesondere für das Polyurethan-Präpolymer, ist bevorzugt ein Diol, insbesondere ein Butandiol, besonders bevorzugt 1,4-Butandiol. Diole sind vorteilhaft, weil sie verglichen mit anderen bekannten Vernetzern, wie Polyaminen, insbesondere Diaminen, oder Wasser, eine geringere Reaktivität gegenüber Isocyanatverbindungen aufweisen, so dass die Gesamt-Präparationsmischung besser eingestellt werden kann, z.B. im Hinblick auf die gewünschte Präpolymer-Konzentration oder Viskosität. Bei Wasser als Vernetzer kann auch das bei der Reaktion freigesetzte CO₂ störend sein.

Bei dem eingesetzten Lösungsmittel oder Dispergiermittel handelt es sich insbesondere um ein inertes Lösungsmittel oder Dispergiermittel, d.h. es reagiert nicht mit den anderen Komponenten der Gesamt-Präparationsmischung. Es können alle üblichen organischen Lösungsmittel bzw. Dispergiermittel oder Mischungen davon eingesetzt werden. Beispielhaft seien Toluol, Xylole, Tetrahydrofuran, Dimethylformamid, Aceton und Methylethylketon genannt.

In einer bevorzugten Ausführungsform werden die einzelnen Komponenten der Gesamt-Präparationsmischung, d.h. das Präpolymer und der Vernetzer, zunächst unabhängig voneinander jeweils in einem Lösungsmittel oder Dispergiermittel, das gleich (z.B. Toluol) oder verschieden (z.B. Toluol, Xylol) sein kann, gelöst bzw. dispergiert, die dann vor, bevorzugt unmittelbar vor Beginn der Präparation des Zugträgers unter Bildung einer noch niedrigviskosen Gesamt-Präparationsmischung vermischt werden.

Bei der Gesamt-Präparationsmischung handelt es sich daher bevorzugt um ein niedrigviskoses Gemisch, wenn sie für die Benetzung des Zugträgers eingesetzt wird. Sie kann so durch Kapillarwirkung gleichmäßig tief in das Faserbündel des Zugträgers eindringen und den Zugträger umhüllen. Dadurch wird gewährleistet, dass jedes Filament im Querschnitt des Zugträgers benetzt wird und es werden ein hoher Füllgrad der Hohlräume sowie die Bildung der Hüllschicht erreicht. Ferner wird die chemische Reaktion der Komponenten durch das Lösungsmittel bzw. Dispergiermittel gehemmt, so dass auch eine gute Kontrolle der Viskosität möglich ist. Beim anschließenden Trocknungsprozess unter Verdampfen des Lösungsmittels bzw. Dispergiermittels beginnt zumeist der eigentliche Start der Reaktion.

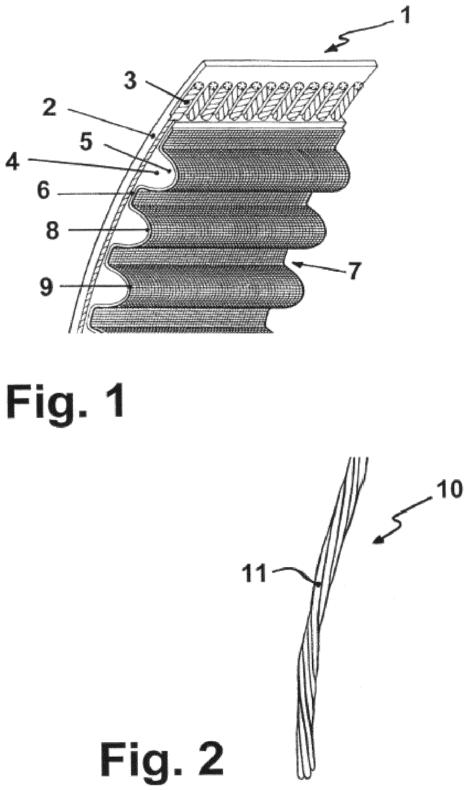

Als Zugträger eignen sich z.B. alle in der Technik bekannten Stränge oder Litzen aus Fasern bzw. Filamenten, insbesondere Zugträger in Cordkonstruktion (Cords). Die Zugträger weisen im Inneren Hohlräume auf. Bevorzugt sind Zugträger aus einem faserförmigen Material. Das faserförmige Material ist bevorzugt ein elektrisch leitfähiges Material. Aus den Fasern können Filamente gebildet werden, die auch als Faserfilamente bezeichnet werden. Die Zugträger können aus Strängen oder Litzen aus Fasern bzw. Filamenten und/oder einer Gruppe von Litzen aus Fasern bzw. Filamenten, die allgemein als Cords bezeichnet werden, gebildet sein. Der Aufbau der Litzen und Cords wird nachstehend unter Bezugnahme auf Fig. 2 näher erläutert. Die dort gemachten Angaben gelten ganz allgemein.

Im allgemeinen sind Zugträger in Cordkonstruktion bevorzugt. Es sind aber auch Zugträger bekannt, z.B. Zugträger aus Carbon-Fasern, die üblicherweise nicht in der klassischen Cordkonstruktion gebildet werden. Sie können z.B. aus Strängen oder Litzen aus dem faserförmigen Material gebildet sein. Sie werden hier wie in der Technik üblich ebenfalls als Cords bezeichnet. Zugträger aus Carbon-Fasern können aber auch in klassischer Cordkonstruktion vorliegen.

Beispiele sind übliche Zugträger bzw. Cords, bei denen die Fasern bzw. Filamente aus Stahl, Polyamid (PA), Aramid, Polyester, Carbon (Kohle), Basalt, Polyetheretherketon (PEEK), Polyethylentherephthalat (PET), Polybenzoxazol (PBO) oder Polyethylen-2,6-naphthalat (PEN) gebildet sind.

Es kann sich bei den Zugträgern auch um Hybrid-Zugträger handeln. Hybrid-Zuträger sind aus Fasern bzw. Filamenten aus mindestens zwei unterschiedlichen Werkstoffen, z.B. den vorstehend Genannten, gebildet, wobei der Anteil des jeweiligen Werkstoffs z.B. 1 bis 99 Gew.-% betragen kann. In einer vorteilhaften Ausführungsform sind Fasern mit höherem Modul innen im Kern und Fasern mit niedrigerem Modul außen. Ein klassisches Beispiel sind z.B. Zuträger aus Carbon-Fasern im Kern und Glas-Fasern als Mantel.

Erfindungsgemäß bevorzugt sind Zugträger aus Carbon-Fasern, Glas-Fasern, Aramid-Fasern oder Basalt-Fasern oder Hybrid-Zugträger aus mindestens zwei dieser Fasern. Bei den Aramid-Fasern können Para-Aramid, Para-Aramid-Copolymere oder Meta-Aramid verwendet werden. Von besonderer Bedeutung sind Zugträger aus Carbon-Fasern und Hybrid-Zugträger aus Carbon-Fasern und Fasern aus mindestens einem anderen Material.

Der Zugträger kann auf übliche Weise mit der Gesamt-Präparationsmischung benetzt werden, beispielsweise durch Sprühen, Streichen oder Tauchen, wobei der Zugträger bevorzugt durch Tauchen des Zugträgers in die Gesamt-Präparationsmischung benetzt wird.

Die Eindringtiefe und Menge des Füllmaterials und die Bildung der Hüllschicht können ferner z.B. durch folgende Parameter beeinflusst werden: Viskosität der Gesamt-Präparationsmischung; Mischungsverhältnis von Lösungsmittel/Dispergiermittel zu den Komponenten (Präpolymer und Vernetzer); Temperatur; Druck; Verweildauer; Anzahl der Präparationsstufen (Tauchgänge) bei der Verfahrensvariante II. Die nachfolgenden Merkmale sind für die Erzielung eines hohen Füllungsgrads und der Bildung der Hüllschicht zweckmäßig und können einzeln oder auch kombiniert miteinander verwendet werden und gelten für Verfahrensvariante I und bei Verfahrensvariante II für jede Präparationsstufe, sofern nicht anders angegeben.

Beispielsweise liegt in der Gesamt-Präparationsmischung der Anteil an Lösungsmittel oder Dispergiermittel, bezogen auf die Gesamtmenge an Lösungsmittel oder Dispergiermittel, Präpolymer und Vernetzer, im Bereich von 1 bis 90 Gew.-%, bevorzugter im Bereich von 20 bis 60 Gew.-%, bei Verfahrensvariante I, und im Bereich von 1 bis 90 Gew.-%, bevorzugter im Bereich von 30 bis 70 Gew.-%, bei Verfahrensvariante II.

Die für die Benetzung des Zugträgers eingesetzte Gesamt-Präparationsmischung hat z.B. eine Viskosität im Bereich von 5 bis 150 mPas, bei Verfahrensvariante I, und im Bereich von 20 bis 500 mPas, bei Verfahrensvariante II. Die Viskosität wird bei einer Temperatur von 20°C gemäß ASTM D-445 bestimmt.

Der präparierte Zugträger kann bei Umgebungstemperatur getrocknet werden. Der präparierte Zugträger wird aber bevorzugt bei einer erhöhten Temperatur getrocknet, die z.B. gleich oder höher, bevorzugt mindestens 5°C höher, z.B. 20°C höher, als der Siedepunkt des Lösungsmittels oder Dispergiermittels in der Gesamt-Präparationsmischung ist. Die Trocknung kann z.B. bei einer Temperatur im Bereich von 80°C bis 300°C, bevorzugt von 120 bis 250°C, durchgeführt werden.

Die Benetzung und/oder Trocknung können bei Unterdruck, Überdruck oder Umgebungsdruck durchgeführt werden. Beispielsweise bei einem Druck von 0 bis 100 bar Überdruck, bevorzugt 0 bis 1 bar Überdruck, z.B. bei Umgebungsdruck.

Die Verweildauer des Zugträgers bei der erhöhten Temperatur zur Trocknung kann in Abhängigkeit von vielen anderen Faktoren, wie z.B. Kanallänge, Verfahrgeschwindigkeit, Topfzeit oder Temperatur, variieren. Beispielhaft kann die Verweildauer im Bereich von 0 bis 6000 s bzw. 0,1 s bis 6000 s, bevorzugt 30 bis 300 s liegen. Eine Verweildauer von 0 s bedeutet eine Trocknung bei Umgebungstemperatur, was aber in der Regel nicht bevorzugt ist.

Bei der Verfahrensvariante II kann die Anzahl an Präparationsstufen (z.B. Tauchgänge) z.B. 2 bis 5, bevorzugt 2 oder 3 betragen.

Bei der Benetzung des Zugträgers nach dem erfindungsgemäßen Verfahren erfolgt eine zumindest teilweise Füllung der Hohlräume des Zugträgers mit dem vernetzten Polymer, insbesondere mit dem vernetzten Polyurethan. Der Füllungsgrad ist vorzugsweise hoch, wobei auf den Füllungsgrad nach Ausführung aller durchgeführten Präparationsstufen und anschließender Trocknung Bezug genommen wird.

So ist bevorzugt, dass nach Trocknung des präparierten Zugträgers wenigstens 80 %, bevorzugt wenigstens 90%, der Zugträgerhohlräume mit dem vernetzten Polymer, bevorzugt dem vernetzten Polyurethan, gefüllt sind. Besonders bevorzugt werden die Zugträgerhohlräume vollständig oder im wesentlichen vollständig gefüllt, z.B. ein Füllungsgrad von etwa 100%.

Ferner wird der Zugträger durch die vorgeschaltete Verfahrensstufe mit einer Hüllschicht aus dem vernetzten Polymer, bevorzugt aus einem vernetzten Polyurethan, versiegelt. Durch diese Beschichtung wird die Zugträgeroberfläche bedeckt. Die nach der Trocknung erhaltene Hüllschicht, bevorzugt aus einem vernetzten Polyurethan, weist z.B. eine Schichtdicke von nicht mehr als 1 mm, bevorzugt nicht mehr als 0,1 mm auf. Die Schichtdicke der Hüllschicht, bevorzugt aus einem vernetzten Polyurethan, beträgt mindestens 5 µm.

Die Verfahrensvariante II ist zur Herstellung des präparierten Zugträgers bevorzugt, insbesondere wenn ein hoher oder nahezu vollständiger Füllungsgrad der Hohlräume erreicht werden soll.

Mit dem nach beiden Verfahrensvarianten I und II präparierten Zugträger wird dann die Riemenfertigung vorgenommen. Hierfür wird der in der vorgeschalteten Verfahrensstufe präparierte Zugträger in das polymere Material des Riemenkörpers eingebettet. Die Riemenfertigung wird auf allgemein bekannte Art durchgeführt, es kann beispielsweise auf den eingangs zitierten Stand der Riementechnologie verwiesen.

Der Riemenkörper selbst ist aus einem polymeren Material mit elastischen Eigenschaften, z.B. Elastomere oder thermoplastische Elastomere. Im polymeren Material des Riemenkörpers können Mischungsingredienzien enthalten sein. Bevorzugte polymere Materialien sind Elastomere auf der Basis einer vernetzten Kautschukmischung, wobei die Kautschukmischung wenigstens eine Kautschukkomponente und ein oder mehrere Mischungsingredienzien enthält. Für Beispiele geeigneter Kautschukkomponenten kann auf die im einleitenden Teil genannten Beispiele verwiesen werden. Die Mischungsingredienzien umfassen wenigstens einen Vernetzer oder ein Vernetzersystem (Vernetzungsmittel und Beschleuniger). Die Kautschukkomponente ist bevorzugt ein Polyurethan.

Weitere mögliche optionale Mischungsingredienzien sind ein oder mehrere ausgewählt aus Füllstoffen, Verarbeitungshilfsmitteln, Weichmachern, Alterungsschutzmitteln sowie gegebenenfalls weiteren Zusatzstoffen, beispielsweise Fasern zwecks Verstärkung und Farbpigmente. Diese weiteren Mischungsingredienzien sind auch für Mischungen für den Riemenkörper geeignet, die ein thermoplastisches Elastomer enthalten.

Der Riemenkörper ist somit vorzugsweise ein Polyurethan, wobei das Polyurethan ein Elastomer oder ein thermoplastisches Elastomer sein kann. Der Riemenkörper kann vorzugsweise aus einem Material aus einem vernetzten Polyurethan basieren, das jedoch eine andere Zusammensetzung als das Polyurethan für die Zugträgerpräparation aufweisen kann.

Die Einbettung des in der vorgeschalteten Verfahrensstufe präparierten Zugträgers in das polymere Material des Riemenkörpers kann z.B. durch Extrusion oder Gießen erfolgen. Bevorzugt ist das Gießen mit einer Gießmasse, die das polymere Material oder Ausgangskomponenten des polymeren Materials des Riemenkörpers enthält.

Es kann z.B. eine Mischung, die thermoplastisches Elastomer und gegebenenfalls weitere Mischungsingredienzien wie vorstehend ausgeführt enthält, verwendet werden. Diese Mischung kann durch Erwärmen in eine Schmelze überführt werden, in die der Zugträger eingebettet wird, z.B. durch Extrusion oder Gießen. Nach Abkühlung wird der Riemen zu erhalten.

Bevorzugt erfolgt die Einbettung des in der vorgeschalteten Verfahrensstufe präparierten Zugträgers in das polymere Material des Riemenkörpers mittels einer Gießmasse. Die Gießmasse umfasst wenigstens eine Kautschukkomponente, bevorzugt ein Polyurethan-Präpolymer, und einen Vernetzer oder ein Vernetzersystem als Ausgangskomponenten des polymeren Materials und gegebenenfalls weitere Mischungsingredienzien. Der Zugträger wird in die Gießmasse eingebettet. Nach der Aushärtung wird der Riemen erhalten.

Der erhaltene Riemen kann weiteren üblichen Bearbeitungsstufen unterworfen werden, beispielsweise kann die Kraftübertragungszone auf die übliche Weise bearbeitet werden, wie im einleitenden Teil beschrieben.

Der Riemen kann als Kraftübertragungsriemen verwendet werden, z.B. als Zahnriemen, wie extrudierte Zahnriemen, Transportband, Flachriemen, Keilriemen, Keilrippenriemen oder Verbundseil.

Die Erfindung wird nun anhand eines Ausführungsbeispiels unter Bezugnahme auf schematische Zeichnungen näher erläutert. Es zeigen:
- Fig. 1: einen Zahnriemen mit einem nach der Verfahrensvariante I oder II PU-präparierten Zugträger (Füllmaterial und Hüllschicht nicht gezeigt);
- Fig. 2: eine Litze, gebildet aus Filamenten als Basis einer Cordkonstruktion.

Fig. 1 zeigt einen Riemen 1 in Form eines Zahnriemens mit einer Decklage 2 als Riemenrücken, einem eingebetteten Zugträger 3 mit mehreren in Riemenlängsrichtung parallel verlaufenden Zugsträngen sowie einem Unterbau 4. Der Unterbau ist mit einer zahnförmigen Profilierung, umfassend Zähne 5 und Zahnstege 6, versehen und umfasst die Kraftübertragungszone 7.

Die Decklage 2 und der Unterbau 4 bilden dabei als Gesamteinheit den Riemenkörper aus einem polymeren Werkstoff mit elastischen Eigenschaften. Hinsichtlich der bevorzugten diesbezüglichen Materialbasis wird auf die Beschreibungseinleitung zum Stand der Technik verwiesen. Von besonderer Bedeutung ist dabei der Einsatz von vernetztem Polyurethan.

Der Zugträger 3 ist insbesondere aus Carbon-Fasern gebildet, wobei der Zugträger mit einem vernetzten Polyurethan präpariert ist, was in Verbindung mit Fig. 2 noch näher erläutert wird.

Exemplarisch kann man zur Präparation z.B. folgende Gesamt-Präparationsmischung verwenden:

### Präparationsmischung bestehend aus:

46,9 g Vibrathane® 8000 (von Chemtura Corporation, MDI-terminierter Polyester)
8,1 g Butandiol
45 g Tetrahydrofuran

Die Kraftübertragungszone 7 des Riemens ist besonders verschleißanfällig durch Abrieb, Hitze und den Einfluss durch Öle. Aus diesem Grunde wird die Kraftübertragungszone zumeist mit einer Textilauflage 8, beispielsweise in Form eines Gewebes, versehen. Diese Textilauflage wird beispielsweise nach der Lehre des Dokumentes WO 2005/080821 A1 zusätzlich mit einem fluorhaltigen Kunststoff, der insbesondere Polytetrafluorethylen (PTFE) ist, getränkt, und zwar bei einem hohen Füllungsgrad des Kunststoffes, wobei gleichzeitig eine Polymerbeschichtung (Versiegelung) als zusätzliche ölbeständige Schutzschicht 9 gebildet wird. Die beiden Teilschichten 8 und 9 mit unterschiedlichen Funktionen treten hier als gemeinsame Schutzschicht auf.

Auch die Decklage 2 des Riemens 1 kann mit einer Textilauflage versehen werden, beispielsweise in der oben beschriebenen Art.

Der Riemen 1 in seiner besonderen Ausführung als Zahnriemen ist z.B. dafür geeignet, eine Ölpumpe eines Motors, beispielsweise eines KFZ-Motors, anzutreiben.

Fig. 2 zeigt eine Litze 10, gebildet aus einer Gruppe von Filamenten 11, wobei z.B. 100 bis 1000 Filamente, insbesondere 500 bis 700 Filamente, eine Litze bilden. Die Litze liegt dabei zumeist als Litzenhelix vor, was in der Fig. 2 verdeutlicht wird. Eine Gruppe von Litzen bildet schließlich den Cord. Zumeist besteht ein Cord aus wenigstens fünf Litzen, insbesondere aus 10 bis 20 Litzen. Bei Carbon-Fasern kann der Zugträger wie gesagt auch aus nur einem Strang bzw. einer Litze gebildet sein.

Die Filamente 11 sind aus einem Fasermaterial gebildet, insbesondere aus Carbon-Fasern. Man spricht in diesem Zusammenhang auch von Faserfilamenten.

Die gesamte Zugträger-Konstruktion bzw. Cordkonstruktion, umfassend das Gesamtsystem von Fasern, Filamenten und Litzen, beinhaltet Hohlräume, nämlich innerhalb der Fasern sowie zwischen den Filamenten und Litzen, die nun im Rahmen der Präparation mit dem vernetzten Polyurethan zumindest teilweise ausgefüllt werden. Zusätzlich wird der Zugträger mit einer Hüllschicht aus dem vernetzten Polyurethan versiegelt. Das Füllmaterial und die Hüllschicht bewirken einerseits eine sehr gute mechanische Anbindung zu den Faserfilamenten und somit zum Zugträger und anderseits eine sehr gute chemische Anbindung zum Riemenkörper. Mit dem erhaltenen Riemen werden sehr gute Laufergebnisse erzielt.

### Bezugszeichenliste

### (Teil der Beschreibung)

- 1: Riemen in Form eines Zahnriemens
- 2: Decklage als Riemenrücken
- 3: Zugträger
- 4: Unterbau
- 5: Zahn
- 6: Zahnsteg
- 7: Kraftübertragungszone
- 8: Textilauflage (Zahnauflage)
- 9: Schutzschicht
- 10: Litze
- 11: Filament

## Patentansprüche

1. Verfahren zur Fertigung eines Riemens (1) mit einer vorgeschalteten Präparation eines Zugträgers (3), wobei der Riemen (1)
einen Riemenkörper aus einem polymeren Material mit elastischen Eigenschaften, umfassend eine Decklage (2) als Riemenrücken und einen Unterbau (4) mit einer Kraftübertragungszone (7); und
einen in dem Riemenkörper eingebetteten Zugträger (3), wobei der Zugträger (3) mit vernetztem Polymer präpariert ist; umfasst,
wobei in einer vorgeschalteten Verfahrensstufe der Riemenfertigung Zugträgerhohlräume des Zugträgers (3) wenigstens zum Teil mit vernetztem Polymer gefüllt werden und der Zugträger (3) mit einer Hüllschicht aus vernetztem Polymer versiegelt wird, indem in einer einzigen Präparationsstufe oder in mindestens zwei Präparationsstufen der Zugträger (3) mit einer Gesamt-Präparationsmischung, umfassend mindestens ein Präpolymer, mindestens einen Vernetzer und mindestens ein Lösungsmittel oder Dispergiermittel, benetzt wird, und der präparierte Zugträger (3) anschließend getrocknet wird,
wobei die Viskosität, bestimmt gemäß ASTM D-445 bei 20°C, der Gesamt-Präparationsmischung bei Einsatz einer einzigen Präparationsstufe im Bereich von 5 bis 150 mPas, und bei Einsatz von mindestens zwei Präparationsstufen im Bereich von 20 bis 500 mPas liegt und die Schichtdicke der Hüllschicht mindestens 5 µm beträgt.

2. Verfahren nach Anspruch 1, **dadurch gekennzeichnet, dass** bei Durchführung von mindestens zwei Präparationsstufen bei jeder Präparationsstufe die gleiche Gesamt-Präparationsmischung oder eine andere Gesamt-Präparationsmischung eingesetzt wird.

3. Verfahren nach einem der Ansprüche 1 bis 2, **dadurch gekennzeichnet, dass** bei Durchführung von mindestens zwei Präparationsstufen zwischen jeder Präparationsstufe eine Trocknung durchgeführt wird.

4. Verfahren nach einem der Ansprüche 1 bis 3, **dadurch gekennzeichnet, dass** als Vernetzer ein Diol, bevorzugt ein Butandiol, eingesetzt wird.

5. Verfahren nach einem der Ansprüche 1 bis 4, **dadurch gekennzeichnet, dass** als Präpolymer ein Polyurethan-Präpolymer eingesetzt wird.

6. Verfahren nach einem der Ansprüche 1 bis 5, **dadurch gekennzeichnet, dass** die Gesamt-Präparationsmischung hergestellt wird, indem eine Präpolymer-Mischung, die das Präpolymer gelöst oder dispergiert in einem Lösungsmittel oder Dispergiermittel umfasst, mit einer Vernetzer-Mischung, die den Vernetzer gelöst oder dispergiert in einem Lösungsmittel oder Dispergiermittel umfasst, gemischt wird, wobei die Lösungsmittel oder Dispergiermittel für die Präpolymer-Mischung und die Vernetzer-Mischung gleich oder verschieden sein können.

7. Verfahren nach einem der Ansprüche 1 bis 6, **dadurch gekennzeichnet, dass** ein Zugträger (3) aus einem faserförmigen Material eingesetzt wird, wobei es sich bevorzugt um ein elektrisch leitfähiges faserförmiges Material handelt.

8. Verfahren nach einem der Ansprüche 1 bis 7, **dadurch gekennzeichnet, dass** als Zugträger (3) ein Zugträger in Cordkonstruktion eingesetzt wird.

9. Verfahren nach einem der Ansprüche 1 bis 8, **dadurch gekennzeichnet, dass** in der Gesamt-Präparationsmischung der Anteil an Lösungsmittel oder Dispergiermittel, bezogen auf die Gesamtmenge an Lösungsmittel oder Dispergiermittel, Präpolymer und Vernetzer in der Gesamt-Präparationsmischung, im Bereich von 1 bis 90 Gew.-% liegt.

10. Verfahren nach einem der Ansprüche 1 bis 9, **dadurch gekennzeichnet, dass** es ferner das Einbetten des in der vorgeschalteten Verfahrensstufe erhaltenen Zugträgers (3) in das polymere Material des Riemenkörpers umfasst.

11. Verfahren nach einem der Ansprüche 1 bis 10, **dadurch gekennzeichnet, dass** die Hüllschicht aus einem vernetzten Polyurethan ist.

12. Verfahren nach einem der Ansprüche 1 bis 11, **dadurch gekennzeichnet, dass** der Riemenkörper aus einem vernetzten Polyurethan ist.

13. Verfahren nach einem der Ansprüche 1 bis 12, **dadurch gekennzeichnet, dass** der Riemen (1) ein Riemen (1) für die Antriebstechnik ist, wobei der Riemen bevorzugt ein Zahnriemen (1), ein Transportband oder ein Keilrippenriemen ist.

## Claims

1. Process for the manufacture of a belt (1) with an upstream pre-treatment of a tension-member system (3), where the belt (1) comprises
a belt body made of a polymeric material with elastic properties, comprising an outer ply (2) as belt backing and comprising an underside (4) with a force-transmission zone (7); and
embedded in the belt body, a tension-member system (3), where the tension-member system (3) has been pre-treated with crosslinked polymer;
where, in an upstream process stage of the manufacture of the belt, cavities in the tension-member system (3) are at least to some extent filled with crosslinked polymer and the tension-member system (3) is sealed by an encapsulating layer made of crosslinked polymer, in that, in a single pre-treatment stage or in at least two pre-treatment stages, the tension-member system (3) is wetted with a complete pre-treatment mixture comprising at least one prepolymer, at least one crosslinking agent and at least one solvent or dispersion medium, and the pre-treated tension-member system (3) is then dried,
where the viscosity of the complete preparation mixture, determined in accordance with ASTM D445 at 20°C is in the range of 5 to 150 Pas when a single pre-treatment stage is used and is in the range of 20 to 500 mPas when at least two preparation stages are used, and the layer thickness of the encapsulating layer is at least 5 µm.

2. Process according to Claim 1, **characterized in that** when at least two pre-treatment stages are carried out, the same complete pre-treatment mixture, or a different complete pre-treatment mixture, is used for each pre-treatment stage.

3. Process according to either of Claims 1 to 2, **characterized in that** when at least two pre-treatment stages are carried out a drying procedure is carried out between each pre-treatment stage.

4. Process according to any of Claims 1 to 3, **characterized in that** a diol, preferably a butanediol, is used as crosslinking agent.

5. Process according to any of Claims 1 to 4, **characterized in that** a polyurethane prepolymer is used as prepolymer.

6. Process according to any of Claims 1 to 5, **characterized in that** the complete pre-treatment mixture is produced **in that** a prepolymer mixture, which comprises the prepolymer dissolved or dispersed in a solvent or dispersion medium, is mixed with a crosslinking-agent mixture, which comprises the crosslinking agent dissolved or dispersed in a solvent or dispersion medium, where the solvent or dispersion medium for the prepolymer mixture and the crosslinking-agent mixture can be identical or different.

7. Process according to any of Claims 1 to 6, **characterized in that** a tension-member system (3) made of a fibrous material is used, this preferably being an electrically conductive fibrous material.

8. Process according to any of Claims 1 to 7, **characterized in that** a tension-member system with cord structure is used as tension-member system (3).

9. Process according to any of Claims 1 to 8, **characterized in that** in the complete pre-treatment mixture the proportion of solvent or dispersion medium, based on the total quantity of solvent or dispersion medium, prepolymer and crosslinking agent in the complete pre-treatment mixture, is in the range of 1 to 90% by weight.

10. Process according to any of Claims 1 to 9, **characterized in that** it further comprises the embedment of the tension-member system (3) obtained in the upstream process stage into the polymeric material of the belt body.

11. Process according to any of Claims 1 to 10, **characterized in that** the encapsulating layer is made of a crosslinked polyurethane.

12. Process according to any of Claims 1 to 11, **characterized in that** the belt body is made of a crosslinked polyurethane.

13. Process according to any of Claims 1 to 12, **characterized in that** the belt (1) is made a belt (1) for drive technology, where the belt is preferably a toothed belt (1), a conveyor belt or a V-ribbed belt.

## Revendications

1. Procédé pour la fabrication d'une courroie (1) présentant une préparation en amont d'un support de traction (3), la courroie (1) comprenant
- un corps de courroie en un matériau polymère doté de propriétés élastiques, comprenant une couche de recouvrement (2) comme dos de courroie et une base (4) présentant une zone de transfert de force (7) ; et
- un support de traction (3) incorporé dans le corps de courroie, le support de traction (3) étant préparé à l'aide d'un polymère réticulé ;
où, dans une étape de procédé en amont de la fabrication de courroie, des espaces creux du support de courroie (3) sont remplis au moins en partie de polymère réticulé et le support de courroie (3) est scellé par une couche enveloppante en polymère réticulé en ce que, dans une seule étape de préparation ou dans au moins deux étapes de préparation, le support de traction (3) est mouillé par un mélange global de préparation, comprenant au moins un prépolymère, au moins un réticulant et au moins un solvant ou dispersant et le support de traction (3) préparé est ensuite séché, la viscosité, déterminée selon la norme ASTM D-445 à 20°C, du mélange global de préparation, lors de l'utilisation d'une seule étape de préparation, étant située dans la plage de 5 à 150 mPa.s et, lors de l'utilisation d'au moins deux étapes de préparation, dans la plage de 20 à 500 mPa.s et l'épaisseur de la couche enveloppante étant d'au moins 5 µm.

2. Procédé selon la revendication 1, **caractérisé en ce que** lors de la réalisation d'au moins deux étapes de préparation, lors de chaque étape de préparation, on utilise le même mélange global de préparation ou un autre mélange global de préparation.

3. Procédé selon l'une quelconque des revendications 1 à 2, **caractérisé en ce que** lors de la réalisation d'au moins deux étapes de préparation, un séchage est réalisé entre chaque étape de préparation.

4. Procédé selon l'une quelconque des revendications 1 à 3, **caractérisé en ce qu'**un diol, de préférence un butanediol, est utilisé comme réticulant.

5. Procédé selon l'une quelconque des revendications 1 à 4, **caractérisé en ce qu'**un prépolymère de polyuréthane est utilisé comme prépolymère.

6. Procédé selon l'une quelconque des revendications 1 à 5, **caractérisé en ce que** le mélange global de préparation est préparé **en ce qu'**un mélange de prépolymère, qui comprend le prépolymère sous forme dissoute ou dispersée dans un solvant ou un dispersant, est mélangé avec un mélange de réticulant, qui comprend le réticulant sous forme dissoute ou dispersée dans un solvant ou un dispersant, les solvants ou les dispersants pour le mélange prépolymère et pour le mélange de réticulant pouvant être identiques ou différents.

7. Procédé selon l'une quelconque des revendications 1 à 6, **caractérisé en ce qu'**un support de traction (3) en un matériau sous forme de fibres est utilisé, le matériau sous forme de fibres étant de préférence un matériau électriquement conducteur.

8. Procédé selon l'une quelconque des revendications 1 à 7, **caractérisé en ce qu'**un support de traction sous forme d'une construction de corde est utilisé comme support de traction (3).

9. Procédé selon l'une quelconque des revendications 1 à 8, **caractérisé en ce que**, dans le mélange global de préparation, la proportion de solvant ou de dispersant, par rapport à la quantité totale de solvant ou de dispersant, de prépolymère et de réticulant dans le mélange global de préparation, se situe dans la plage de 1 à 90% en poids.

10. Procédé selon l'une quelconque des revendications 1 à 9, **caractérisé en ce qu'**il comprend en outre l'incorporation du support de traction (3) obtenu dans l'étape de procédé en amont dans le matériau polymère du corps de courroie.

11. Procédé selon l'une quelconque des revendications 1 à 10, **caractérisé en ce que** la couche enveloppante est constituée par un polyuréthane réticulé.

12. Procédé selon l'une quelconque des revendications 1 à 11, **caractérisé en ce que** le corps de courroie est constitué par un polyuréthane réticulé.

13. Procédé selon l'une quelconque des revendications 1 à 12, **caractérisé en ce que** la courroie (1) est une courroie (1) pour la technique d'entraînement, la courroie étant de préférence une courroie dentée (1), une courroie de transport ou une courroie à nervures trapézoïdales.
